# EUROPÄISCHE PATENTSCHRIFT

(11) **EP 1 329 692 B1**
(45) Veröffentlichungstag und Bekanntmachung des Hinweises auf die Patenterteilung: **23.03.2005**
(21) Anmeldenummer: 02024149.3
(22) Anmeldetag: 30.10.2002
(51) Int. Cl.: G01C 21/32, G06T 17/50

(54) **Verfahren zum Ermitteln von Kartendaten**
Method for determining map data
Procédé pour déterminer des données cartographiques

(30) Priorität: 17.01.2002 DE 10201519
(43) Veröffentlichungstag der Anmeldung: 23.07.2003
(73) Patentinhaber: ROBERT BOSCH GMBH, 70442 Stuttgart (DE)
(72) Erfinder: Otte, Dirk, 30880 Laatzen (DE)

(56) Entgegenhaltungen:
- EP-A- 0 261 450
- EP-A- 1 003 015
- US-B1- 6 173 219
- MEGHERBI D B ET AL: "A distributed data compression/decompression technique for images via conformal mapping" , VISUAL INFORMATION PROCESSING X, ORLANDO, FL, USA, 19-20 APRIL 2001 , PROCEEDINGS OF THE SPIE - THE INTERNATIONAL SOCIETY FOR OPTICAL ENGINEERING, 2001, SPIE-INT. SOC. OPT. ENG, USA, PAGE(S) 169 - 180 XP009002155 ISSN: 0277-786X * Seite 169 - Seite 173 *

## Beschreibung

Die Erfindung betrifft ein Verfahren zum Ermitteln von Kartendaten, insbesondere für eine Anzeige eines Fahrzeug-Informationssystems.

Auf Anzeigevorrichtungen von Fahrzeug-Informationssystemen, insbesondere Navigationssystemen, werden dem Fahrer verschiedene Informationen in Teilbereichen der Anzeigevorrichtung angezeigt. Hierbei kann zum Beispiel eine Straßenkarte mit einem Umgebungsbereich der aktuellen Position des Fahrzeuges zusammen mit Informationen über die Umgebung angezeigt werden. Die Informationen über die Umgebung des Fahrzeuges werden auf der Anzeigevorrichtung in der Regel durch verschiedenfarbige Flächen zur Unterscheidung von zum Beispiel Bebauungsflächen, Parks und Gewässern, verschiedenfarbige Linien zur Darstellung von zum Beispiel Grenzen und Eisenbahntrassen, und markante Punkte zur Darstellung von zum Beispiel Ortszentren und Tankstellen wiedergegeben. Aus EP-0261450 ist ein Verfahren bekannt zum Unterteilen eines Kartenbereichs in einzelne konvexe Teilbereiche.

Die Kartendaten zur Darstellung der Flächen bzw. Kartenbereiche werden in der Regel durch einen geschlossenen Randlinienzug aus Randlinienstrecken beschrieben. Der Randlinienzug wird hierbei als Folge von Eckpunkten beschrieben, zwischen denen die Randlinienstrecken ausgebildet sind. Diese Folgen von Eckpunkten sind auf einem lokalen Datenträger gespeichert oder werden über Datenfernübertragung angefordert.

Die Darstellungen auf der Karte müssen während der Fahrt ständig aktualisiert und somit neu gezeichnet werden. Hierzu werden die relevanten Kartendaten aufgerufen und mit der im Kraftfahrzeug hierzu vorgesehenen Recheneinrichtung durch eine Koordinatentransformation in für die Anzeigevorrichtung geeignete Kartenbereiche konvertiert. Um eine schnelle Aufbereitung der Kartendaten im geeigneten Anzeigeformat zu ermöglichen, werden die Kartendaten geographischer Bereiche im allgemeinen in verschiedenen Maßstäben gespeichert. Hierzu müssen aus den z. B. durch geographische Vermessung oder Einscannen älteren Kartenmaterials gewonnen Daten geeignete Kartendaten für die Darstellung auf einer Anzeigevorrichtung gewonnen werden. Derartige Kartendaten sind oftmals sehr umfangreich, da die darzustellenden Kartenbereiche bzw. Flächen sehr komplex sind und somit die Koordinaten vieler Eckpunkte zu speichern sind, auch wenn die Komplexität der Fläche in dem jeweiligen Maßstab auf der Anzeigevorrichtung nicht wiedergegeben werden kann.

Bei der Konvertierung während der Fahrt werden zunächst die Eckpunkte des gespeicherten Kartenbereichs durch eine Koordinatentransformation in Eckpunkte des anzuzeigenden Kartenbereichs transformiert. Anschließend werden von einem Füllpunkt innerhalb der Randlinie ausgehend die weiteren Bildpunkte des Kartenbereichs bis zu der Randlinie ermittelt und mit der Flächenfarbe aufgefüllt. Eine geeignete Position eines Füllpunktes innerhalb der Randlinie ist jedoch zunächst unbekannt und kann nicht direkt aus der gespeicherten Folge von Eckpunkten erkannt werden. Der Füllpunkt sollte einen gewissen Mindestabstand zum Rand der Fläche bzw. des Kartenbereichs haben, da bei der Konvertierung der gespeicherten Kartendaten eine Koordinatentransformation, insbesondere eine Drehung, evtl. auch eine Streckung und/oder eine Translation, vorgenommen wird, bei der verschiedene Bildpunkte des Kartenbereichs auf einen Bildpunkt des Anzeigekartenbereichs abgebildet werden können. Wird in den Kartendaten ein Eingangsfüllpunkt gespeichert, der innerhalb der Randlinie des Kartenbereichs liegt, so kann dieser bei der Konvertierung bzw. Transformation evtl. auf einen gleichen Bildpunkt wie ein Randpunkt der Randlinie abgebildet werden. In diesem Fall führt das nachfolgende Auffüllverfahren zur Ausbildung des farbigen Anzeigekartenbereichs jedoch dazu, dass von der Randlinie ausgehend der gesamte Bildschirm mit der einheitlichen Farbe ausgefüllt wird und somit ein fehlerhaftes Bild dargestellt wird. Eine Ermittlung eines geeigneten Füllpunktes ist jedoch insbesondere bei komplexen, verwinkelten Flächen aufwendig, so dass oftmals in den gespeicherten Kartendaten zusätzlich zu der Folge von Eckpunkten geeignete Eingangsfüllpunkte gespeichert werden, wodurch die gespeicherte Datenmenge jedoch deutlich erhöht wird.

Da zur Speicherung der vielen Eckpunkte und ggf. Eingangsfüllpunkte ein erheblicher Speicherplatz erforderlich ist, ist die Speicherung größerer geografischer Bereiche in mehreren Maßstäben auf üblichen Datenträgern, wie z. B. einer CD, problematisch.

Weiterhin kann das aktuell durchzuführende Auffüllverfahren insbesondere bei komplexen, verwinkelten Flächen aufgrund der begrenzten Rechenkapazität der im Fahrzeug vorhandenen Recheneinrichtung eine längere Zeitdauer in Anspruch nehmen, was von dem Fahrer als störend empfunden wird und eine genaue und flüssige Anzeige der jeweiligen Fahrposition und -umgebung verhindert.

Das erfindungsgemäße Verfahren zum Ermitteln von Kartendaten nach Anspruch 1 weist demgegenüber insbesondere den Vorteil auf, dass Kartendaten ermittelt werden können, die eine Speicherung großer geografischer Bereiche in mehreren Maßstäben mit relativ geringem Speicherplatz ermöglichen und weiterhin eine schnelle und sichere Ermittlung der aktuellen Anzeigedaten für eine Anzeigvorrichtung gewährleisten. Durch die schnelle Ermittlung der. Anzeigedaten wird eine fließende Darstellung der sich ändernden Anzeigekartenbereiche während einer Fahrt ermöglicht, die von dem Betrachter als angenehm und leicht ablesbar empfunden wird.

Der Erfindung liegt der Gedanke zugrunde, einen größeren Kartenbereich bzw. eine größere Kartenfläche in geeigneter Weise in kleinere Teilbereiche bzw. Teilflächen zu unterteilen. Hierbei wird die Unterteilung zwischen zumindest einem Konkav-Eckpunkt und einem weiteren Eckpunkten - vorteihafterweise zwischen zwei Konkav-Eckpunkten - durchgeführt, so dass Teilbereiche mit weniger Eckpunkten und insbesondere weniger Konkav-Eckpunkten gebildet werden. Dem liegt die Erkenntnis zugrunde, dass derartige konvexere und damit unverwinkeltere Teilbereiche mit weniger Eckpunkten schneller gezeichnet werden können als ein großer Kartenbereich mit vielen Eckpunkten.

Ein Konkav-Eckpunkt liegt hierbei an einer Ecke des Kartenbereichs, deren Winkel kleiner als 180° ist. Ein Winkel an einem Eckpunkt wird hierbei als Winkel vom vorhergehenden zum nachfolgenden Eckpunkt bestimmt. Die Eckpunkte einer Fläche sind hierbei üblicherweise im mathematisch positiven Sinne orientiert, so dass beim Entlangfahren auf der Randlinie von Eckpunkt zu Eckpunkt der Kartenbereich immer links liegt; grundsätzlich kann das erfindungsgemäße Verfahren jedoch auch entsprechend auch mit entgegengesetzter Orientierung durchgeführt werden. Jeder Kartenbereich bzw. jede Fläche enthält konvexe Eckpunkte, deren Winkel an den Eckpunkten konvex, d. h. größer/gleich 180° sind; konvexe Kartenbereiche bzw. Flächen enthalten keine Konkav-Punkte.

Die durch Teilung mittels der Teilungslinien gebildeten Teilbereiche können anschließend daraufhin untersucht werden, ob sie erneut unterteilt werden können. Somit können iterativ kleinere, konvexere und damit schneller in der Bordrecheneinrichtung zu konvertierende Teilkartenbereiche abgespeichert werden. Das iterative Verfahren kann durchgeführt werden, bis lediglich konvexe Teilbereiche verbleiben oder, falls ein Teilbereich mit lediglich einem Konkav-Eckpunkt nicht mehr geteilt wird, Teilbereiche mit einer oder keinen konkaven Ecke verbleiben.

Nachdem durch einmalige oder mehrmalige Teilung die Teilbereiche gebildet worden sind, kann vorteilhafterweise zu den einzelnen Teilbereichen jeweils ein Füllpunkt mit vorgegebenen Bedingungen, insbesondere einem hinreichenden Abstand von der Randlinie ermittelt werden. Falls dies nicht möglich ist, wird dieser Teilbereich gestrichen. Somit können kleine Verwinkelungen der Randlinie geglättet werden, die ohnehin gar nicht oder lediglich durch einen einzigen Bildschirmpunkt angezeigt werden können, aber den erforderlichen Speicherplatz deutlich erhöhen und ggf. den Rechenaufwand beim Auffüllverfahren erhöhen können. Der Füllpunkt wird hierbei vorteilhafterweise nicht als Teil der erzeugten Kartendaten in dem Ausgangskartenspeicher abgespeichert, so dass der erforderliche Speicherplatz weiter reduziert ist.

Durch die Aufteilung der Flächen erhöht sich nicht nur die Zeichengeschwindigkeit des Auffüllvorgangs, zusätzlich wird auch noch der im Fahrzeug benötigte Arbeitspeicher reduziert, in den zum Zeichnen und Füllen alle Eckpunkte gleichzeitig geladen werden müssen. Die Einsparung des benötigten Arbeitsspeichers bedeutet, dass dieser für andere Aufgaben zur Verfügung steht oder dass er eingespart werden kann. Hierbei können die erforderlichen mathematischen Prozesse des Auffüllverfahrens ganz durch eine hardwaremäßig implementierte Recheneinrichtung bzw. Bordrecheneinrichtung ausgeführt werden.

Die Erfindung wird im Folgenden anhand der beiliegenden Zeichnungen an einigen Ausführungsformen näher erläutert. Es zeigen:
- Fig. 1: einen Kartenbereich mit Eckpunkten;
- Fig. 2-5: aufeinanderfolgende Schritte des erfindungsgemäßen Verfahrens bei einem weiteren Kartenbereich;

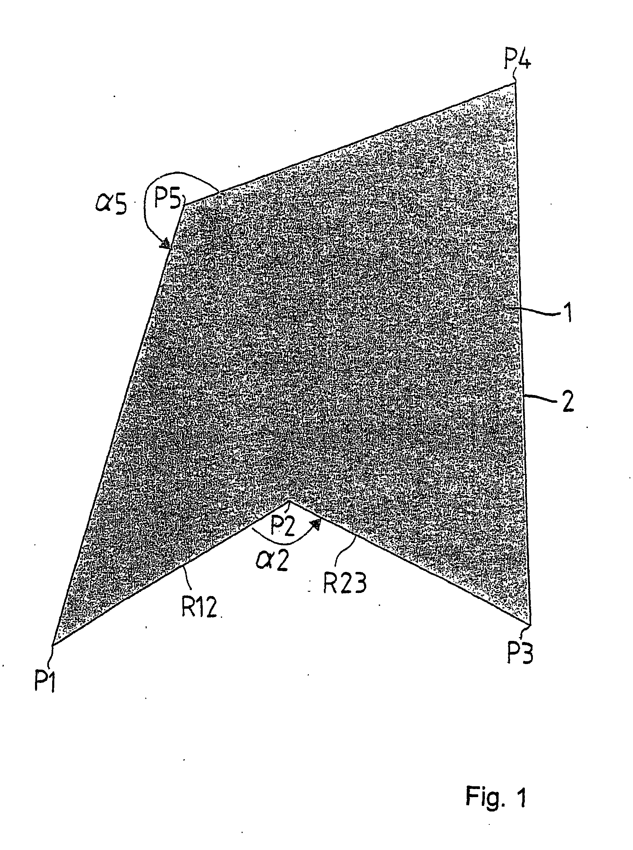

Der in Fig. 1 dargestellte Kartenbereich 1 wird durch eine Randlinie 2 begrenzt, die durch einzelne Randlinienstrecken Rij - eingezeichnet sind beispielhaft R12 und R23 - gebildet wird, die durch eine Folge von Eckpunkten Pi = P1, P2, P3, P4, P5 definiert sind. Zur Ermittlung von Teilkartenbereichen werden in einem ersten Schritt a) zunächst die Winkel an den Eckpunkten untersucht, die bei jedem Eckpunkt Pi zwischen dem vorhergehenden Eckpunkt Pi-1 und dem nachfolgenden Eckpunkt Pi+1 im mathematisch positiven Sinne - d. h. gegen den Uhrzeigersinn - gebildet sind. So ist zum Beispiel der eingezeichnete Winkel α5 am Eckpunkt P5 größer als 180°, so dass P5 kein Konkav-Eckpunkt ist. Hingegen ist Eckpunkt P2 ein Konkav-Punkt, da der eingezeichnete Winkel α2 < 180° ist. P2 kann somit in einem weiteren Schritt b) als Ausgangspunkt einer Teilungslinie genommen werden. In dem Kartenbereich 1 ist kein weiterer Konkavpunkt vorhanden, zu dem eine Teilungslinie gezogen werden kann; in diesem Fall kann eine Teilung unterlassen werden oder als weiterer Endpunkt einer Teilungslinie ein nicht benachbarter Konvex-Punkt einer konvexen, d.h. nicht konkaven Ecke, d.h. P4 oder P5, gewählt werden.

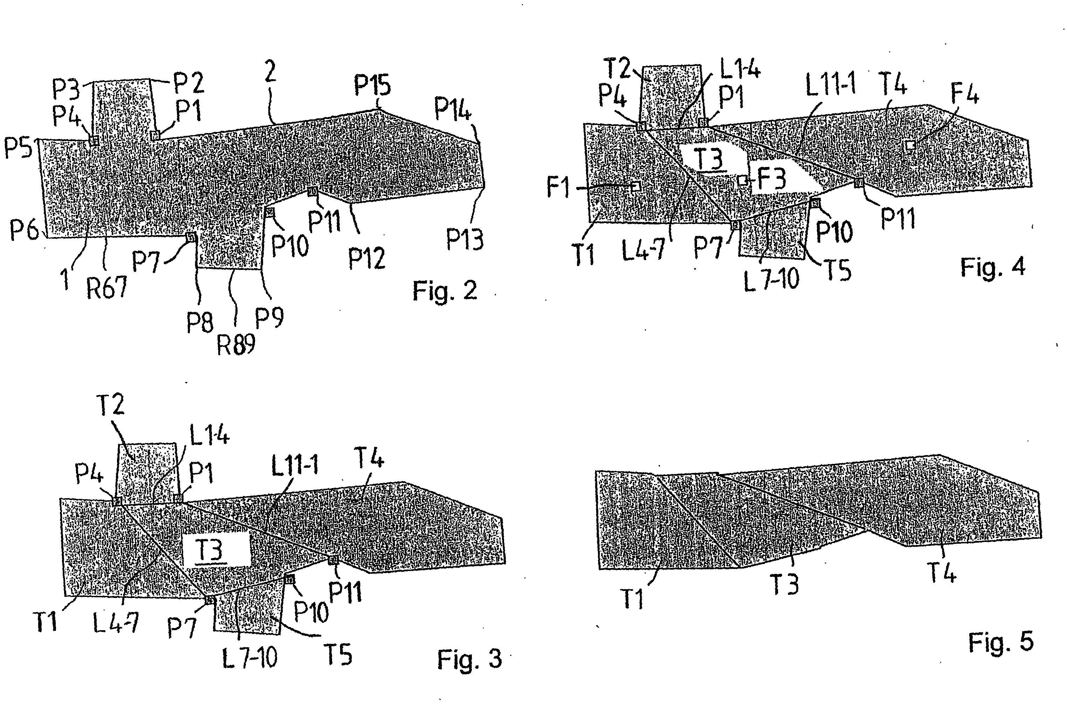

Bei der in den Fig. 2-5 gezeigten Ausführungsform wird ein Kartenbereich 1 genommen, der als Folge von fünfzehn Eckpunkten P1-P15 festgelegt ist. Wie aus Fig. 2 ersichtlich, wird beim ersten Schritt a) des Überprüfens der Eckpunkte festgestellt, dass P1, P4, P7, P10 und P11 Konkav-Eckpunkte sind.

Gemäß Fig. 3 werden in dem nachfolgenden Schritt b) Teilungslinien Li-j zwischen den Konkav-Eckpunkten gezogen. Hierzu wird vorteilhafterweise von einem Konkav-Eckpunkt - z. B. P1 - ausgehend der nächste Konkav-Eckpunkt in der Folge von Eckpunkten, d. h. P4 zur Ausbildung der Teilungslinie L1-4 gewählt. Von P4 ausgehend wird der nächste Konkav-Eckpunkt in der Folge von Eckpunkten, d. h. P7 zur Ausbildung der Teilungslinie L4-7, von hier ausgehend wiederum P10 zur Ausbildung der Teilungslinie L7-10 gewählt. Von P10 ausgehend ist der nächste Konkav-Eckpunkt P11. Da der Konkav-Eckpunkt P11 jedoch zu P10 benachbart ist, wird keine Teilungslinie gezogen; eine derartige Teilungslinie entspräche der Randlinienstrecke R10,11 und wäre somit unsinnig. Von P11 ausgehend wird die Teilungslinie L11-1 gezogen; hierdurch wird gemäß einem Schritt c) der Kartenbereich 1 in Teilbereiche T1, T2, T3, T4, T5 unterteilt, die durch Randlinienstrecken Rij und Teilungslinien Li-j begrenzt sind. In einem nachfolgenden Schritt d) können wiederum die gebildeten Teilbereiche als Kartenbereiche genommen werden, die gemäß den Schritten a) bis c) überprüft und ggf. geteilt werden; dieses iterative Verfahren führt im vorliegenden Fall zu keiner weiteren Teilung.

Gemäß Fig. 4 wird nunmehr in einem Schritt e) eine Ermittlung von Füllpunkten Fi zu den gebildeten Teilbereichen T1-T5 durchgeführt. Hierbei werden Füllpunkte F1, F3, F4 zu den Teilbereichen T1, T3, T4 gefunden; zu den Teilbereichen T2, T5 werden keine Füllpunkte ermittelt. Die Füllpunkte dienen in an sich bekannter Weise als Ausgangspunkte eines Auffüllverfahrens, bei dem von dem Füllpunkt ausgehend sukzessiv benachbarte Punkte ermittelt werden, bis das Verfahren an eine Randlinie - d. h. eine Randlinie Rij zwischen zwei Eckpunkten oder eine Teilungslinie Li-j zwischen zwei Konkav-Eckpunkten - gerät.

Gemäß Fig. 5 werden somit Kartendaten zu den drei Teilbereichen T1, T3 und T4, d. h. zu drei Flächen mit jeweils vier bzw. fünf Eckpunkten ermittelt, so dass die hierdurch gebildete gesamte Kartenfläche einfacher strukturiert ist. Die gebildeten Unterfolgen P4,P5,P6,P7; P1,P4,P7,P10,P11; P1,P11,P12,P13,P14,P15 zur Beschreibung der Teilbereiche werden anschließend in einem Schritt f) gespeichert.

## Patentansprüche

1. Verfahren zum Ermitteln von Kartendaten, insbesondere für eine Anzeigevorrichtung eines Fahrzeug-Informationssystems, mit mindestens folgenden Schritten:
a) Ermitteln, ob ein durch eine Folge von mehr als drei Eckpunkten beschriebener zweidimensionaler Kartenbereich (1) mindestens einen Konkav-Eckpunkt P2, P1, P4, P7, P10, P11 einer konkaven Ecke aufweist,
b) Falls ein Konkav-Eckpunkt ermittelt wird, Bilden einer Teilungslinie (L1-4, L4-7, L4-7, L7-10, L11-1) zwischen dem Konkav-Eckpunkt und einem nicht benachbarten weiteren Eckpunkt, und
c) Teilen des Kartenbereichs (1) durch die mindestens eine Teilungslinie in mindestens zwei Teilbereiche (T1, 2, 3, 4, 5), die jeweils durch eine Unterfolge der Folge von Eckpunkten beschrieben werden.

2. Verfahren nach Anspruch 1, **dadurch gekennzeichnet dass** in Schritt a) ermittelt wird, ob der Kartenbereich (1) mindestens zwei Konkav-Eckpunkte aufweist und in Schritt b) Teilungslinien nur zwischen zwei nicht benachbarten Konkav-Eckpunkten gebildet werden.

3. Verfahren nach Anspruch 1 oder 2, **dadurch gekennzeichnet dass** in Schritt a) zu jedem Eckpunkt ermittelt wird, ob er ein Konkav-Eckpunkt ist.

4. Verfahren nach Anspruch 3, **dadurch gekennzeichnet, dass** zwischen jedem Konkav-Eckpunkt und dem nächsten Konkav-Eckpunkt der Folge von Konkav-Eckpunkten eine Teilungslinie gezogen wird, falls der nächste Konkav-Eckpunkt nicht benachbart ist.

5. Verfahren nach einem der vorherigen Ansprüche, **dadurch gekennzeichnet, dass** in einem nachfolgenden Schritt d) die gebildeten Teilbereiche (T1, 2, 3, 4, 5) wiederum als Kartenbereiche genommen werden, die gemäß den Schritten a) bis c) überprüft und gegebenenfalls geteilt werden.

6. Verfahren nach Anspruch 5, **dadurch gekennzeichnet, dass** iterativ die gebildeten Teilbereiche überprüft und gegebenenfalls geteilt werden, bis unteilbare Teilbereiche gebildet sind.

7. Verfahren nach einem der vorherigen Ansprüche, **dadurch gekennzeichnet, dass** in einem nachfolgenden Schritt e) ermittelt wird, ob zu den gebildeten Teilbereichen (T1,2,3,4,5) jeweils ein Füllpunkt (F1, 3, 4) innerhalb einer Teilbereichsrandlinie des Teilbereichs gefunden wird und Teilbereiche (T2, T5), zu denen kein Füllpunkt ermittelt wird, gelösch werden.

8. Verfahren nach einem der vorherigen Ansprüche, **dadurch gekennzeichnet dass** in einem nachfolgenden Schritt f) die ermittelten Teilkartenbereiche als Unterfolgen (P4,P5,P6,P7; P1,P4,P7,P10,P11; P1,P11,P12,P13,P14,P15) der Eckpunkte in einem Kartenspeicher abgespeichert werden.

## Claims

1. Method for determining map data, in particular for a display device of a vehicle information system, having at least the following steps:
a) it is determined whether a two-dimensional map region (1), which is described by a sequence of more than three vertices, has at least one concave vertex P2, P1, P4, P7, P10, P11 of a concave corner,
b) if a concave vertex is determined, a dividing line (L1-4, L4-7, L7-10, L11-1) is formed between the concave vertex and a further, non-adjacent vertex, and
c) the map region (1) is divided by the at least one dividing line into at least two component regions (T1, 2, 3, 4, 5) which are each described by a subset of the series of vertices.

2. Method according to Claim 1, **characterized in that** in step
a) it is determined whether the map region (1) has at least two concave vertices, and in step b) dividing lines are formed only between two non-adjacent concave vertices.

3. Method according to Claim 1 or 2, **characterized in that** in step a) it is determined whether each vertex is a concave vertex.

## Revendications

1. Procédé pour déterminer des données cartographiques, en particulier pour un dispositif d'affichage dans un système d'information de véhicule, comportant au moins les étapes suivantes :
a) on détermine si une zone de carte (1) bidimensionnelle décrite par une succession de plus de trois points d'angle présente au moins un point d'angle concave (P2, P1, P4, P7, P10, P11) d'un angle concave,
b) si on détermine qu'il y a un point d'angle concave, on forme une ligne de séparation (L1-4, L4-7, L7-10, L11-1) entre le point d'angle concave et un autre point d'angle non voisin, et
c) par l'au moins une ligne de séparation, on divise la zone de carte (1) en au moins deux zones partielles (T1, 2, 3, 4, 5) qui sont décrites chacune par une succession partielle de la succession de points d'angle.

2. Procédé selon la revendication 1,
**caractérisé en ce qu'**
à l'étape a) on détermine si la zone de carte (1) présente au moins deux points d'angle concave et à l'étape b) on ne forme des lignes de séparation qu'entre deux points d'angle concaves non voisins.

3. Procédé selon la revendication 1 ou 2,
**caractérisé en ce qu'**
on détermine pour chaque point d'angle à l'étape a) s'il est un point d'angle concave.
